(19) **Europäisches Patentamt**
**European Patent Office**
**Office européen des brevets**

(11) **EP 3 986 018 A1**

(12) **EUROPEAN PATENT APPLICATION**
published in accordance with Art. 153(4) EPC

(43) Date of publication:
**20.04.2022 Bulletin 2022/16**

(21) Application number: **20836784.7**

(22) Date of filing: **03.07.2020**

(51) International Patent Classification (IPC):
**H04W 24/10** (2009.01)  **G01S 5/02** (2010.01)

(52) Cooperative Patent Classification (CPC):
**G01S 5/02; H04W 24/10; H04W 64/00**

(86) International application number:
**PCT/CN2020/100019**

(87) International publication number:
**WO 2021/004378 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.07.2019 CN 201910625709**

(71) Applicant: **Huawei Technologies Co., Ltd.
Longgang District
Shenzhen,
Guangdong 518129 (CN)**

(72) Inventors:
• **LIU, Chenchen
 Shenzhen, Guangdong 518129 (CN)**
• **DU, Rui
 Shenzhen, Guangdong 518129 (CN)**
• **HAN, Xiao
 Shenzhen, Guangdong 518129 (CN)**
• **YU, Jian
 Shenzhen, Guangdong 518129 (CN)**
• **ZHANG, Meihong
 Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SENSING MEASUREMENT METHOD AND DEVICE**

(57) A sensing measurement method and apparatus are provided. The sensing measurement method includes: obtaining, by an initiator station, first positioning information, where the first positioning information includes one or more pieces of the following information: a location of the initiator station, a location of a responder station, a direction of departure in which the initiator station sends a sensing measurement signal, and an incident direction in which the sensing measurement signal arrives at the responder station after being reflected by a to-be-detected target; or obtaining, by an initiator station, second positioning information, where the second positioning information includes one or more pieces of the following information: a location of the initiator station, a location of a responder station, one or more incident directions in which a sensing measurement signal arrives at the responder station, and a corresponding time of arrival; and determining, by the initiator station, location information of the to-be-detected target based on the first positioning information or the second positioning information. In the solutions of this application, a location of the to-be-detected target can be accurately obtained, to implement sensing of the location of the passive target.

| |
|---|
| An initiator station obtains first positioning information or second positioning information |

↓

| |
|---|
| The initiator station determines location information of a to-be-detected target based on the first positioning information or the second positioning information |

S101

S102

FIG. 7

**Description**

This application claims priority to Chinese Patent Application No. 201910625709.3, filed with the China National Intellectual Property Administration on July 11, 2019 and entitled "SENSING MEASUREMENT METHOD AND APPARATUS", which is incorporated herein by reference in its entirety.

**TECHNICAL FIELD**

This application relates to the field of radio frequency technologies, and in particular, to a sensing measurement method and apparatus.

**BACKGROUND**

A location measurement method, namely, fine time measurement (fine time measurement, FTM), is defined in a Wi-Fi standard. However, in the measurement method, it is required that a to-be-detected target is an active device that supports an FTM protocol, and locations of a passive device and a surrounding environment cannot be sensed.

**SUMMARY**

This application provides a sensing measurement method and apparatus, to accurately sense a location of a passive target.

According to a first aspect, a sensing measurement method is provided. The method includes: An initiator station obtains first positioning information, where the first positioning information includes one or more pieces of the following information: a location of the initiator station, a location of a responder station, a direction of departure in which the initiator station sends a sensing measurement signal, and an incident direction in which the sensing measurement signal arrives at the responder station after being reflected by a to-be-detected target; or an initiator station obtains second positioning information, where the second positioning information includes one or more pieces of the following information: a location of the initiator station, a location of a responder station, one or more incident directions in which a sensing measurement signal arrives at the responder station, and a corresponding time of arrival; and the initiator station determines location information of the to-be-detected target based on the first positioning information or the second positioning information. In this aspect, a location of the to-be-detected target can be accurately obtained, to implement sensing of the location of the passive target.

In an implementation, that an initiator station obtains first positioning information includes: The initiator station directionally sends the sensing measurement signal; and the initiator station receives a first location measurement report from the responder station, where the first location measurement report includes at least information about the incident direction in which the sensing measurement signal arrives at the responder station after being reflected by the to-be-detected target. In this implementation, when each of the initiator station and the responder station is equipped with an antenna array that includes a plurality of Wi-Fi antennas, the initiator station may directionally send the sensing measurement signal, the responder station may receive the information about the incident direction in which the sensing measurement signal arrives at the responder station after being reflected by the to-be-detected target, and then the initiator station may accurately determine the location of the to-be-detected target based on the information about the incident direction.

In another implementation, that an initiator station obtains second positioning information includes: The initiator station omnidirectionally sends the sensing measurement signal, where the sensing measurement signal arrives at the responder station in different directions of arrival through one or more paths; and the initiator station receives a second location measurement report from the responder station, where the second location measurement report includes at least information about the one or more incident directions in which the sensing measurement signal arrives at the responder station and the corresponding time of arrival. In this implementation, when the initiator station is not equipped with an antenna array that includes a plurality of Wi-Fi antennas, the initiator station omnidirectionally sends the sensing measurement signal, one or more to-be-detected targets in a surrounding environment reflect the sensing measurement signal, the responder station obtains the information about the one or more incident directions in which the sensing measurement signal arrives at the responder station and the corresponding time of arrival, and the initiator station may accurately determine locations of the one or more to-be-detected targets based on the information.

In another implementation, the method further includes: The initiator station sends a request frame to the responder station, where the request frame includes indication information indicating whether a current request is a sensing measurement request and/or indication information indicating whether the initiator station supports sensing measurement; and the initiator station receives a response frame from the responder station, where the response frame is used to respond to the request frame, and the response frame includes indication information indicating whether a current response is sensing measurement and/or indication information indicating whether the responder station supports sensing measurement. In this implementation, in a negotiation phase, the initiator station may explicitly indicate the following information by using the request frame, and/or the responder station may explicitly indicate the following information by using the response frame: whether the current request is a sensing measurement request and/or whether the initiator station/the responder station supports sensing measurement.

In another implementation, the method further includes: The initiator station receives a trigger frame from the responder station, where the trigger frame includes a type indication, the type indication is used to indicate that a type of the trigger frame is a sensing measurement type, and the trigger frame of the sensing measurement type is used to trigger the initiator station to perform sensing measurement. In this implementation, in a TB mode-based sensing measurement process, the responder station explicitly indicates, by sending the trigger frame, the initiator station to perform sensing measurement.

In another implementation, the method further includes: The initiator station sends an announcement frame to the responder station, where the announcement frame is used to indicate the responder station to perform sensing measurement. In this implementation, in a non-TB mode-based sensing measurement process, the initiator station explicitly indicates, by sending the announcement frame, the responder station to perform sensing measurement.

In another implementation, the sensing measurement signal includes a first indication value, and the first indication value is used to indicate that the sensing measurement signal is directionally or omnidirectionally sent. In this implementation, for directional sending or omnidirectional sending, the responder station performs measurement and calculation in a different manner. Therefore, it may be explicitly indicated in the sensing measurement signal that the sensing measurement signal is directionally or omnidirectionally sent.

In another implementation, the response frame further includes an indication indicating whether to delay feedback of the first location measurement report or the second location measurement report or an indication of a measurement time required when feedback is to be delayed. In this implementation, when the responder station cannot report a location measurement report during first measurement, the responder station may explicitly report a capability, namely, the indication indicating whether to delay feedback of the first location measurement report or the second location measurement report or the indication of the measurement time required when feedback is to be delayed, of the responder station in the response frame.

In another implementation, the trigger frame is further used to indicate to perform new sensing measurement or report a previous measurement report. In this implementation, when the responder station reports an empty location measurement report during first measurement, during second measurement, the initiator station may indicate, by using the trigger frame, the responder station to perform new sensing measurement or report the previous measurement report, to improve report reporting accuracy.

According to a second aspect, a sensing measurement method is provided. The method includes: A responder station receives a sensing measurement signal directionally or omnidirectionally sent by an initiator station; the responder station measures the sensing measurement signal; the responder station generates a first location measurement report based on the sensing measurement signal directionally sent by the initiator station, where the first location measurement report includes at least information about an incident direction in which the sensing measurement signal arrives at the responder station after being reflected by a to-be-detected target; or the responder station generates a second location measurement report based on the sensing measurement signal omnidirectionally sent by the initiator station, where the second location measurement report includes at least information about one or more incident directions in which the sensing measurement signal arrives at the responder station and a corresponding time of arrival; and the responder station sends the first location measurement report or the second location measurement report to the initiator station. In an implementation, the method further includes: The responder station receives a request frame from the initiator station, where the request frame includes indication information indicating whether a current request is a sensing measurement request and/or indication information indicating whether the initiator station supports sensing measurement; and the responder station sends a response frame to the initiator station, where the response frame is used to respond to the request frame, and the response frame includes indication information indicating whether a current response is sensing measurement and/or indication information indicating whether the responder station supports sensing measurement.

In another implementation, the method further includes: The responder station sends a trigger frame to the initiator station, where the trigger frame includes a type indication, the type indication is used to indicate that a type of the trigger frame is a sensing measurement type, and the trigger frame of the sensing measurement type is used to trigger the initiator station to perform sensing measurement.

In another implementation, the method further includes: The responder station receives an announcement frame from the initiator station, where the announcement frame is used to indicate the responder station to perform sensing measurement.

In another implementation, the sensing measurement signal includes a first indication value, and the first indication value is used to indicate that the sensing measurement signal is directionally or omnidirectionally sent.

In another implementation, the response frame further includes an indication indicating whether to delay feedback of the first location measurement report or the second location measurement report or an indication of a measurement time required when feedback is to be delayed.

In another implementation, the trigger frame is further used to indicate to perform new sensing measurement or report a previous measurement report.

According to a third aspect, a sensing measurement apparatus is provided. The sensing measurement apparatus has a function of implementing an action of the sensing measurement apparatus in the foregoing method. The function may be implemented by hardware, or may be implemented by hardware executing corresponding software. The hardware or the software includes one or more modules corresponding to the foregoing function.

In a possible implementation, the sensing measurement apparatus includes: an obtaining unit, configured to obtain first positioning information, where the first positioning information includes one or more pieces of the following information: a location of an initiator station, a location of a responder station, a direction of departure in which the initiator station sends a sensing measurement signal, and an incident direction in which the sensing measurement signal arrives at the responder station after being reflected by a to-be-detected target; or an obtaining unit, configured to obtain second positioning information, where the second positioning information includes one or more pieces of the following information: a location of an initiator station, a location of a responder station, one or more incident directions in which a sensing measurement signal arrives at the responder station, and a corresponding time of arrival; and a determining unit, configured to determine location information of the to-be-detected target based on the first positioning information or the second positioning information.

In another possible implementation, the sensing measurement apparatus includes a transceiver, a memory, and a processor. The memory stores a group of program code, and the processor is configured to invoke the program code stored in the memory, to perform the following operations: obtaining first positioning information, where the first positioning information includes one or more pieces of the following information: a location of an initiator station, a location of a responder station, a direction of departure in which the initiator station sends a sensing measurement signal, and an incident direction in which the sensing measurement signal arrives at the responder station after being reflected by a to-be-detected target; or obtaining second positioning information, where the second positioning information includes one or more pieces of the following information: a location of an initiator station, a location of a responder station, one or more incident directions in which a sensing measurement signal arrives at the responder station, and a corresponding time of arrival; and determining location information of the to-be-detected target based on the first positioning information or the second positioning information.

Based on a same invention concept, for a problem-resolving principle and beneficial effects of the apparatus, refer to the foregoing possible method implementations of the sensing measurement apparatus and the brought beneficial effects. Therefore, for an implementation of the apparatus, refer to the implementation of the method. Repeated parts are not described again.

According to a fourth aspect, a sensing measurement apparatus is provided. The sensing measurement apparatus has a function of implementing an action of the sensing measurement apparatus in the foregoing method. The function may be implemented by hardware, or may be implemented by hardware executing corresponding software. The hardware or the software includes one or more modules corresponding to the foregoing function.

In a possible implementation, the sensing measurement apparatus includes: a receiving unit, configured to receive a sensing measurement signal directionally or omnidirectionally sent by an initiator station; a measurement unit, configured to measure the sensing measurement signal; a generation unit, configured to generate a first location measurement report based on the sensing measurement signal directionally sent by the initiator station, where the first location measurement report includes at least information about an incident direction in which the sensing measurement signal arrives at a responder station after being reflected by a to-be-detected target; or a generation unit, configured to generate a second location measurement report based on the sensing measurement signal omnidirectionally sent by the initiator station, where the second location measurement report includes at least information about one or more incident directions in which the sensing measurement signal arrives at a responder station and a corresponding time of arrival; and a sending unit, configured to send the first location measurement report or the second location measurement report to the initiator station.

In another possible implementation, the sensing measurement apparatus includes a transceiver, a memory, and a processor. The memory stores a group of program code, and the processor is configured to invoke the program code stored in the memory, to perform the following operations: receiving a sensing measurement signal directionally or omnidirectionally sent by an initiator station; measuring the sensing measurement signal; generating a first location measurement report based on the sensing measurement signal directionally sent by the initiator station, where the first location measurement report includes at least information about an incident direction in which the sensing measurement signal arrives at a responder station after being reflected by a to-be-detected target; or generating a second location measurement report based on the sensing measurement signal omnidirectionally sent by the initiator station, where the second location measurement report includes at least information about one or more incident directions in which the sensing measurement signal arrives at a responder station and a corresponding time of arrival; and sending the first location measurement report or the second location measurement report to the initiator station.

Based on a same invention concept, for a problem-resolving principle and beneficial effects of the apparatus, refer to the foregoing possible method implementations of the sensing measurement apparatus and the brought beneficial effects. Therefore, for implementation of the apparatus, refer to the implementation of the method. Repeated parts are not described again.

According to a fifth aspect, a computer-readable storage medium is provided. The computer-readable storage medium stores instructions. When the instructions are run on a computer, the computer is enabled to perform the method according to any one of the first aspect, the second aspect, or the implementations thereof.

According to a sixth aspect, a computer program product that includes instructions is provided. When the instructions are run on a computer, the computer is enabled to perform the method according to any one of the first aspect, the second aspect, or the implementations.

## BRIEF DESCRIPTION OF DRAWINGS

The following describes the accompanying drawings required for describing embodiments or the background of this application.

FIG. 1 is a schematic diagram of a radar system;
FIG. 2 is a schematic diagram of a working procedure of FTM in a trigger-based mode;
FIG. 3 shows a detailed interaction procedure of measurement and result feedback of an FTM protocol in a TB mode;
FIG. 4 is a schematic diagram of measurement and result feedback procedures in a non-TB mode;
FIG. 5 is a schematic diagram of a basic principle of FTM ranging in a TB mode;
FIG. 6 is a schematic diagram of a basic principle of FTM ranging in a non-TB mode;
FIG. 7 is a schematic flowchart of a sensing measurement method according to an embodiment of this application;
FIG. 8 is a schematic flowchart of another sensing measurement method according to an embodiment of this application;
FIG. 9 is a schematic diagram of a negotiation procedure between an initiator station and a responder station;
FIG. 10 is a schematic diagram of a sensing measurement procedure in a TB mode according to an embodiment;
FIG. 11 is a schematic diagram of a sensing measurement procedure in a non-TB mode according to an embodiment;
FIG. 12 is a schematic diagram in which an initiator station directionally sends a sensing measurement signal;
FIG. 13 is a schematic flowchart of another sensing measurement method according to an embodiment of this application;
FIG. 14 is a schematic diagram in which an initiator station omnidirectionally sends a sensing measurement signal;
FIG. 15 is a schematic diagram in which an RSTA simultaneously triggers a plurality of ISTAs to perform a sensing measurement procedure;
FIG. 16 is a schematic diagram of a feedback delay procedure;
FIG. 17 is a schematic structural diagram of a sensing measurement apparatus according to an embodiment of this application;
FIG. 18 is a schematic structural diagram of another sensing measurement apparatus according to an embodiment of this application; and
FIG. 19 is a schematic structural diagram of another sensing measurement apparatus according to an embodiment of this application.

## DESCRIPTION OF EMBODIMENTS

The following describes embodiments of the present invention with reference to the accompanying drawings in the embodiments of the present invention.

The following describes several basic concepts in this application.

(1) Radar technology

The radar technology is derived from World War II, and is one of key reconnaissance systems of war. Information provided by using the radar technology is a main basis for decision-making. The radar technology has been widely applied to the automobile field, the security and protection field, and other civilian fields in recent years.

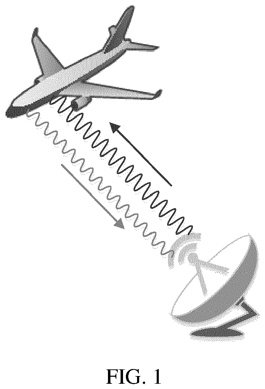

FIG. 1 is a schematic diagram of a radar system. A basic technical principle of radar is as follows: A radar transmitting system transmits a specific electromagnetic wave signal, where the electromagnetic wave signal is reflected when encountering a target obstacle in a propagation process, and the radar transmitting system receives a reflected signal, calculates information such as a distance, a speed, and an orientation of a target obstacle after a comparison with the transmitted signal is made, and even may perform imaging. The distance of the target obstacle may be obtained by calculating a round-trip time of the signal. Due to a Doppler effect, frequency of the transmitted signal changes after the transmitted signal is reflected by the moving target, and the movement speed of the target obstacle may be obtained by using this feature. In addition, orientation information of the target obstacle may be determined based on an incident direction of the transmitted signal or a receiving direction of a reflected wave.

Radar is classified by using various methods, and may be classified as monostatic radar, bistatic radar, and multistatic radar based on whether a transmit end and a receive end are disposed together. For the monostatic radar, a transmit end and a receive end are close or integrated, and the monostatic radar features a simple structure and relatively low complexity. For each of the bistatic radar and the multistatic radar, a distance between a transmit end and a receive end is comparable with a detection distance of the radar. The transmit end and the receive end are separated, and therefore a problem of time synchronization between a transmit device and a receive device and data fusion between a plurality of devices usually needs to be resolved, and a system is relatively complex. However, the bistatic radar and the multistatic radar have some advantages in resolution and robustness due to spatial diversity.

A Wi-Fi device is currently widely used, and a main structure of the Wi-Fi device is similar to a basic structure of a radar device. Therefore, it is a promising research direction to introduce the radar technology into a Wi-Fi system to enable the Wi-Fi device to have a radar detection capability while completing a communication function. Wi-Fi radar may be applied to fields such as personnel positioning and motion recognition, and has an irreplaceable advantage in privacy and the like over a conventional camera-based solution. In addition, in application of the radar technology to Wi-Fi, currently widely available device resources may be reused.

(2) Fine time measurement

In an FTM method, a round-trip time (round-trip time, RTT) of signal transmission between an initiator station (initiator station, ISTA) and a responder station (responder station, RSTA) is calculated through interaction between the two stations, and then a signal propagation distance between the ISTA and the RSTA is calculated based on a propagation speed of an electromagnetic wave. When there is a line of sight (line of sight, LOS) between the ISTA and the RSTA, the signal propagation distance is a distance between the ISTA and the RSTA. When there is a non-line of sight (non-line of sight, NLOS) between the ISTA and the RSTA, the FTM method is inapplicable.

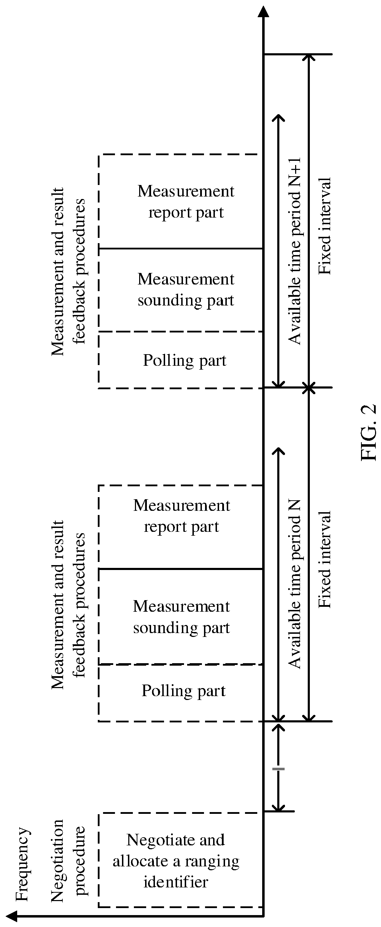

The FTM method mainly includes three procedures: a negotiation procedure, a measurement procedure, and a result feedback procedure. FIG. 2 is a schematic diagram of a working procedure of FTM in a trigger-based (trigger-based, TB) mode. When there is an FTM measurement request, the ISTA may send an FTM request frame to the RSTA. After receiving the FTM request frame, the RSTA replies to the ISTA with an available time period of the RSTA. In a negotiation process, the ISTA and the RSTA also exchange capabilities of each other, and the RSTA allocates a ranging identifier (ranging ID) to the ISTA (If the ISTA is associated with the RSTA, no allocation is required, and an associated identifier (associated ID) may be directly used). After the negotiation procedure is completed, a plurality of measurement procedures and result feedback procedures may be performed between the ISTA and the RSTA without the negotiation procedure.

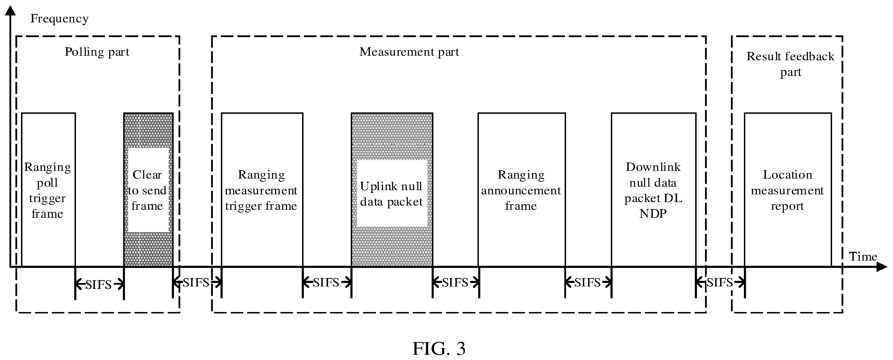

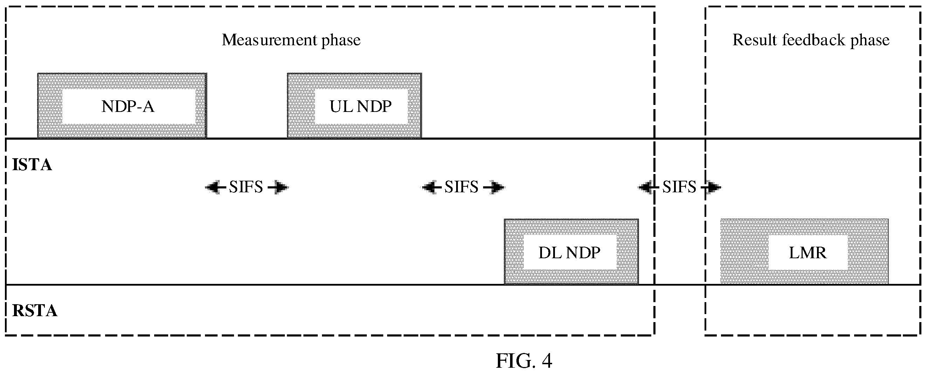

A detailed interaction procedure of measurement and result feedback of an FTM protocol in the TB mode is shown in FIG. 3. In the TB mode, the RSTA sends a poll frame (poll frame) to the ISTA in an idle time window of the RSTA, to notify the ISTA that measurement can be started. After receiving information, the ISTA sends a clear to send (clear to send, CTS) frame to occupy a channel. The RSTA then sends a ranging trigger (trigger) frame, and the ISTA replies with a null data packet (null data packet, NDP) frame after receiving the trigger frame. The RSTA that receives the NDP sends a ranging null data packet announcement (NDP announcement, NDPA) frame, and sends a new NDP frame after an SIFS passes. After another SIFS passes, the RSTA feeds back a measurement result to the ISTA. Measurement and result feedback procedures in a non-TB mode are shown in FIG. 4. In the non-TB mode, the ISTA first sends an NDPA frame, and sends a UL NDP frame after an SIFS passes. The RSTA replies with a DL NDP frame after receiving the NDP frame for the SIFS, and the RSTA sends a measurement result to the ISTA after another SIFS passes.

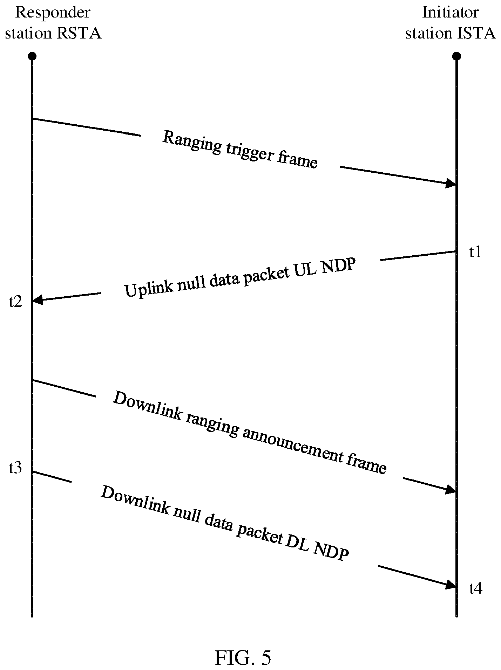

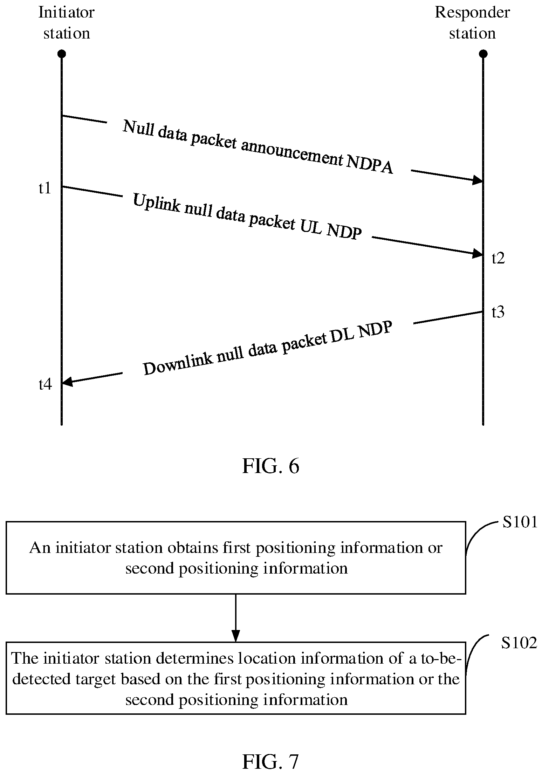

FIG. 5 is a schematic diagram of a basic principle of FTM ranging in the TB mode, and FIG. 6 shows a basic principle of FTM ranging in the non-TB mode. There is a basically same principle regardless of in the TB mode or the non-TB mode. During FTM ranging, each of the ISTA and the RSTA needs to record sending times and receiving times of all NDP frames in a measurement period. As shown in FIG. 5, when the ISTA sends a UL NDP frame, the ISTA records a transmission time t1 of the frame, and after receiving the frame, the RSTA records a time t2 of receiving the frame by the RSTA. When sending a DL NDP, the RSTA needs to record a corresponding sending time t3, and after receiving the DL NDP frame, the ISTA records a corresponding receiving time t4. In this case, the round-trip time of signal propagation between the ISTA and the RSTA may be obtained based on a formula (1):

$$RTT = [(t4 - t1) - (t3 - t2)] \quad (1).$$

Then, the distance between the ISTA and the RSTA may be obtained with reference to the propagation speed of the electromagnetic wave and based on a formula (2):

$$D = \frac{RTT * c}{2} \quad (2),$$

where

c in the formula (2) is a speed of light. Based on FTM measurement results of the ISTA and a plurality of RSTAs, the ISTA may infer location information of the ISTA.

However, in the foregoing FTM technology, it is required that a to-be-positioned target is an active device that supports the FTM protocol, and locations of a passive device and a surrounding environment cannot be sensed. In addition, whether an RTT measurement result is available depends on whether there is a LOS between the ISTA and the RSTA. In a case of an NLOS, some FTM measurement results cannot be used for positioning.

The embodiments of this application provide a sensing measurement method and apparatus, to accurately obtain a location of a to-be-detected target, so as to implement detection of the location of the passive target.

In the embodiments, the passive target is a device that does not need to transmit a Wi-Fi signal, but reflects a received signal based on a physical characteristic of the device.

FIG. 7 is a schematic flowchart of a sensing measurement method according to an embodiment of this application. For example, the method may include the following steps.

S101. An initiator station obtains first positioning information, where the first positioning information includes one or more pieces of the following information: a location of the initiator station, a location of a responder station, a direction of departure in which the initiator station sends a sensing measurement signal, and an incident direction in which the sensing measurement signal arrives at the responder station after being reflected by a to-be-detected target; or an initiator station obtains second positioning information, where the second positioning information includes one or more pieces of the following information: a location of the initiator station, a location of a responder station, one or more incident directions in which a sensing measurement signal arrives at the responder station, and a corresponding time of arrival.

In this embodiment, it may be determined, based on information indicating whether each of the initiator station and the responder station is equipped with an antenna array that includes a plurality of Wi-Fi antennas, that the initiator station directionally or omnidirectionally sends the sensing measurement signal. If each of the initiator station and the responder station is equipped with an antenna array that includes a plurality of Wi-Fi antennas, the initiator station may directionally send the sensing measurement signal to the to-be-detected target, and the initiator station receives a measurement report that is sent by the responder station and that includes information about the incident direction in which the sensing measurement signal arrives at the responder station after being reflected by the to-be-detected target, and obtains the first positioning information. The first positioning information may further include one or more pieces of the following information: the location of the initiator station and the location of the responder station. If the initiator station or the responder station is not equipped with an antenna array that includes a plurality of Wi-Fi antennas, the initiator station may omnidirectionally send the sensing measurement signal, and the initiator station receives a measurement report that is sent by the responder station and that includes information about the one or more incident directions in which the sensing measurement signal arrives at the responder station and the corresponding time of arrival, and obtains the second positioning information. The second positioning information may further include one or more pieces of the following information: the location of the initiator station and the location of the responder station.

S102. The initiator station determines location information of the to-be-detected target based on the first positioning information or the second positioning information.

The initiator station may determine the location information of the to-be-detected target after obtaining the first positioning information or the second positioning information.

Specifically, for the manner of directional sending by the initiator station, there is a specific relationship between location information of the initiator station, the location information of the to-be-detected target, and the direction of departure AoD of the sensing measurement signal, and there is a specific relationship between the location information of the to-be-detected target, location information of the responder station, and the incident direction AoA in which the sensing measurement signal arrives at the responder station. The location information of the to-be-detected target may be determined based on the two relationships.

For the manner of omnidirectional sending by the initiator station, the initiator station may calculate, based on the one or more incident directions AoA in which the sensing measurement signal arrives at the responder station, the corresponding time of arrival, location information of the initiator station, and location information of the responder station and by using a time difference of arrival between a signal in an incident direction of another NLOS and a signal in an incident direction of a LOS and a distance between the initiator station and the responder station, a transmission distance of a signal corresponding to an AoA corresponding to any NLOS, may know, based on the distance, that the passive target that reflects the sensing measurement signal is located on an ellipse whose focal points are the initiator station and the responder station and whose long axis is the transmission distance corresponding to the NLOS, and then determine, with reference to the incident direction in which the sensing measurement signal arrives at the responder station, that a location of the to-be-detected target is an intersection point of an incident direction ray of the AoA of the sensing measurement signal and the ellipse.

According to the sensing measurement method provided in this embodiment of this application, the location of the to-be-detected target can be accurately obtained, to implement sensing of the location of the passive target.

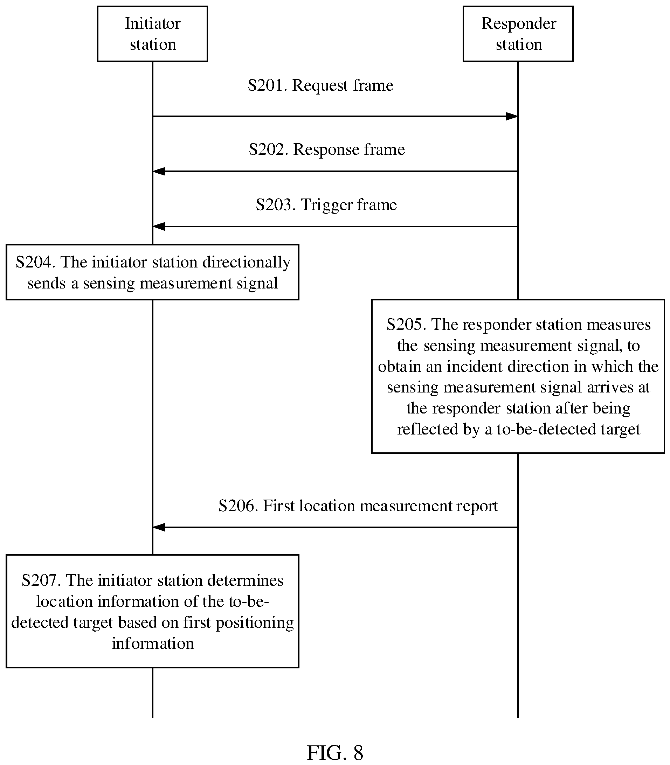

FIG. 8 is a schematic flowchart of another sensing measurement method according to an embodiment of this application. For example, the method may include the following steps.

S201. An initiator station sends a request frame to a responder station, where the request frame includes an indication indicating whether a current request is a sensing measurement request and/or an indication indicating whether the initiator station supports sensing measurement.

Correspondingly, the responder station receives the request frame.

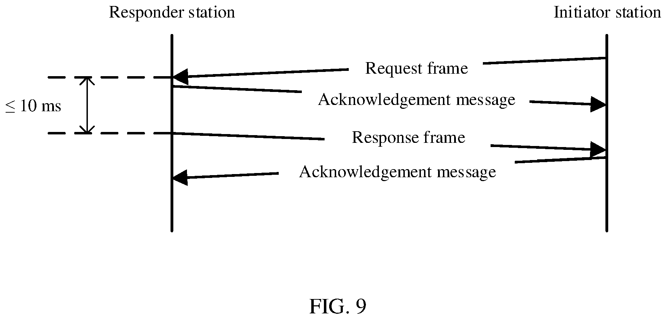

When there is a passive detection requirement, the ISTA may send the request frame to the RSTA. FIG. 9 is a schematic diagram of a negotiation procedure between the initiator station and the responder station. The negotiation procedure may be a negotiation procedure of an FTM protocol. As shown in FIG. 9, when there is a measurement request, the ISTA sends the request frame (or referred to as an initial FTM request (initial FTM request)) to the RSTA. If the responder station receives the request frame, and can perform measurement, the responder station replies to the initiator station with an acknowledgement (acknowledgement) message after a short interframe space (short interframe space, SIFS) passes.

In this embodiment, the request frame includes the indication indicating whether the current request is a sensing measurement request and the indication indicating whether the initiator station supports sensing measurement. That is, the initiator station indicates whether the current measurement is sensing measurement and the initiator station has a capability of supporting sensing measurement.

Specifically, the request frame carries a ranging parameters element field, and the ranging parameters element field includes information such as an available time period, a capability, and a requirement. Specific formats of the ranging parameters element field and a ranging parameters (ranging parameters) field in the ranging parameters element field are as follows:

| Octets: | Element ID | Length | Element ID extension | Ranging parameters | Ranging subelements |
|---|---|---|---|---|---|
| | 1 | 1 | 1 | 6 | Variable |

| Bits: | B0 B1 | B2–B6 | B7 | B8 | B9 | B10 B11 | B12 | B13 | B14 | B15 |
|---|---|---|---|---|---|---|---|---|---|---|
| | Status indication | Value | ISTA-2-RSTA LMR feedback | Secure LTF Req. | Secure LTF support | Ranging priority | R2I ToA type | I2R ToA type | R2I AoA Req. | I2R AoA Req. |
| | 2 | 5 | 1 | 1 | 1 | 3 | 1 | 1 | 1 | 1 |

| Bits: | B16–B21 | B22 B23 | B24–B26 | B27–B29 | B30 | B31 | B32–B34 | B35–B37 |
|---|---|---|---|---|---|---|---|---|
| | Format and bandwith | Reserved | Max UL Req. | Max DL Req. | Device class | Full bandwith UL MU-MIMO | Max DL STS ≤ 80 MHz | Max DL STS > 80 MHz |
| | 6 | 2 | 3 | 3 | 1 | 1 | 3 | 3 |

| Bits: | B38 B39 | B40–B42 | B43–B45 | B46 B47 |
|---|---|---|---|---|
| | Reserved | Max DL STS ≤ 80 MHz | Max DL STS ≤ 80 MHz | Reserved |
| | 2 | 3 | 3 | 2 |

The ranging parameters element field includes an element ID field, a length field, an element ID extension field, the ranging parameters field, and a ranging subelements field.

B8 and B9 fields in the ranging parameters field are used to indicate whether the current request is a sensing measurement request. Specifically, the B8 field is used by the initiator station to indicate whether the current request is a sensing measurement request, and the B9 field is used by the responder station to indicate whether the current request is a sensing measurement request. The B8 and B9 fields are usually used together.

In addition, any one of bits B22, B23, B38, B39, B46, and B47 in the ranging parameters field may be used to indicate whether the initiator station supports sensing measurement. For example, when any one of the bits is "1", it indicates that the initiator station supports sensing measurement. When any one of the bits is "0", it indicates that the initiator station does not support sensing measurement. Alternatively, when any one of the bits is "0", it indicates that the initiator station supports sensing measurement. When any one of the bits is "1", it indicates that the initiator station does not support sensing measurement.

S202. The responder station sends a response frame to the initiator station, where the response frame is used to respond to the request frame, and the response frame includes indication information indicating whether a current response is sensing measurement and/or indication information indicating whether the responder station supports sensing measurement.

Correspondingly, the initiator station receives the response frame from the responder station.

Still referring to FIG. 9, after receiving the request frame, the RSTA sends the response frame to the ISTA within 10 milliseconds. After receiving the response frame, the ISTA replies to the RSTA with an acknowledgement message.

The response frame also carries a ranging parameters element field. A specific format of the ranging parameters element field is the same as that of the ranging parameters element field carried in the request frame. The ranging parameters element field includes information such as an available time period, a capability, and a requirement. In addition, in the response frame, the indication information used to indicate whether the current response is sensing measurement and the indication information used to indicate whether sensing measurement is supported may be the same as those in the request frame. Details are not described herein.

S203. The responder station sends a trigger frame to the initiator station, where the trigger frame includes a type indication, the type indication is used to indicate that a type of the trigger frame is a sensing measurement type, and the trigger frame of the sensing measurement type is used to trigger the initiator station to perform sensing measurement.

Correspondingly, the initiator station receives the trigger frame.

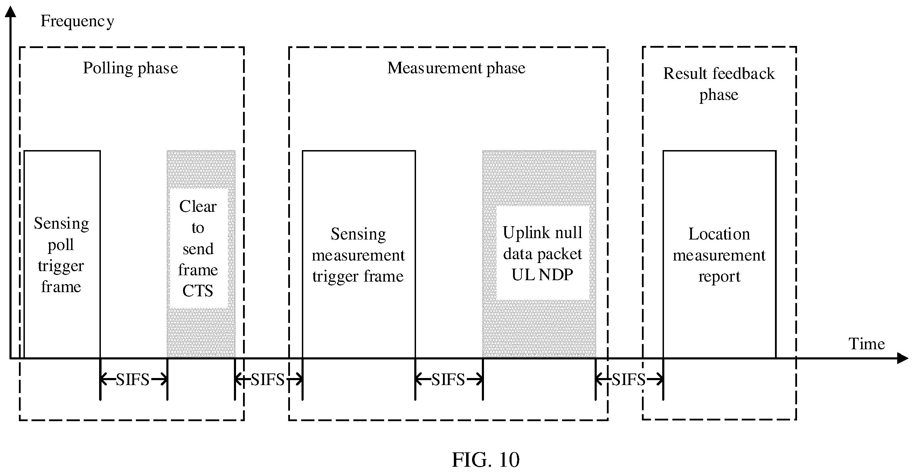

FIG. 10 is a schematic diagram of a sensing measurement procedure in a TB mode according to this embodiment. The RSTA sends a poll frame to the ISTA in an idle time window of the RSTA, to notify the ISTA that measurement can be started. After receiving information, the ISTA sends a CTS frame to occupy a channel. The RSTA then sends a trigger frame (trigger frame) for sensing measurement.

A specific format of the trigger frame is as follows:

MAC header

| Frame control | Duration | RA | TA | Common info | User info | ... | User info | Padding | FCS |
|---|---|---|---|---|---|---|---|---|---|
| 2 | 2 | 6 | 6 | 8 or more | 5 or more | | 5 or more | Variable | 4 |

Octets:

(a) Trigger frame format

| B0  B3 | B4  B15 | B16 | B17 | B18  B19 | B20  B21 | B22 | B23  B25 |
|---|---|---|---|---|---|---|---|
| Trigger type | UL length | More TF | CS required | UL BW | GI and LTF type | MU-MIMO LTF mode | Num of HE-LTF symbols and midamble periodicity |
| 4 | 12 | 1 | 1 | 2 | 2 | 1 | 3 |

Bits:

| B26 | B27 | B28  B33 | B34  B35 | B36 | B37  B52 | B53 | B54  B62 | B63 | |
|---|---|---|---|---|---|---|---|---|---|
| UL STBC | LDPC extra symbol segment | AP TX power | Pre-FEC padding factor | PE disambiguity | UL spatial reuse | Doppler | UL HE-SIG-A2 reserved | Reserved | Trigger dependent common info |
| 1 | 1 | 6 | 2 | 1 | 16 | 1 | 9 | 1 | Variable |

Bits:

(b) Common info detail in trigger frame

| Ranging trigger subtype | Reserved |
|---|---|
| 4 | 4 |

Bits:

(c) Trigger dependent common info detail

In this embodiment, the trigger frame includes the type indication, the type indication is used to indicate that the type of the trigger frame is the sensing measurement type, and the trigger frame of the sensing measurement type is used to trigger the initiator station to perform sensing measurement.

Specifically, a new trigger type, namely, a sensing measurement type (sensing), is added to a trigger type (trigger type) of the trigger frame, as shown in Table 1:

**Table 1**

| Trigger type subfield value 0 | Trigger frame variant Basic |
|---|---|
| 1 | Beamforming report poll (BFRP) |
| 2 | MU-BAR |
| 3 | MU-RTS |
| 4 | Buffer status report poll (BSRP) |
| 5 | GCR MU-BAR |
| 6 | Bandwidth query report poll (BQRP) |
| 7 | NDP feedback report poll (NFRP) |
| 8 | Ranging |
| 9 | Sensing |
| 10-15 | Reserved |

S203 is based on the TB mode, or may be based on a non-TB mode in this embodiment. In an alternative implementation of S203, S203 may be replaced with the following content: The initiator station sends an announcement frame to the responder station, where the announcement frame is used to indicate the responder station to perform sensing measurement. Correspondingly, the responder station receives the announcement frame.

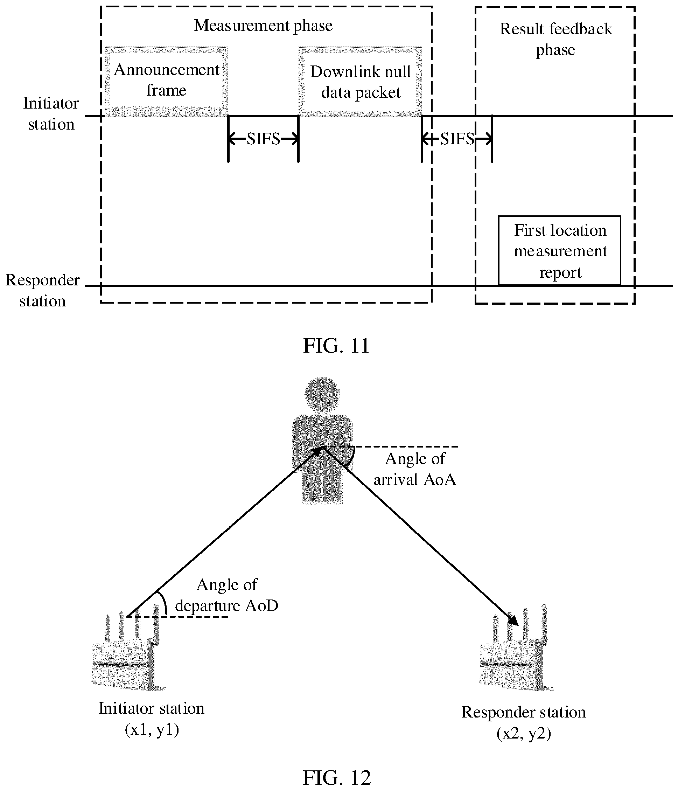

Specifically, FIG. 11 is a schematic diagram of a sensing measurement procedure in the non-TB mode according to this embodiment. The ISTA sends an NDPA frame, and the NDPA frame is used to indicate the RSTA to perform sensing measurement.

Specifically, the ISTA indicates, by using B26 or B31 in a STA info field in a structure of the NDPA frame, whether a subsequent NDP frame is a sensing NDP frame. For example, when the bit is "1", it indicates that the subsequent frame is a sensing NDP, and sensing information such as an AoA needs to be calculated. When the bit is "0", the NDP is a normal ranging NDP frame. Alternatively, when the bit is "0", it indicates that the subsequent frame is a sensing NDP, and sensing information such as an AoA needs to be calculated. When the bit is "1", the NDP is a normal ranging NDP frame.

Specific formats of the NDPA frame and the STA info field in the NDPA frame are as follows:

| Frame control | Duration | RA | TA | Sounding dialog token | STA info 1 | ... | STA info n | STA info SAC | FCS |
|---|---|---|---|---|---|---|---|---|---|
| Octets: 2 | 2 | 6 | 6 | 1 | 4 | | 4 | 4 | 4 |

(a) Structure of the NDPA frame

| AID11/ RID11 | Offset | DLN_ STS | DL Rep | UL N_ STS | Reserved | Disambiguation | UL Rep | Reserved |
|---|---|---|---|---|---|---|---|---|
| B0 B10 | B11 B16 | B17 B19 | B20 B22 B23 | B25 | B26 | B27 | B28 B30 | B31 |
| Bits: 11 | 6 | 3 | 3 | 3 | 1 | 1 | 3 | 1 |

(b) Structure of the STA info field

The NDPA frame includes n STA info fields, and a reserved field B26 or B31 of any STA info field in the NDPA frame may be used to indicate whether the subsequent NDP frame is a sensing NDP frame.

S204. The initiator station directionally sends a sensing measurement signal.

Correspondingly, the responder station receives the sensing measurement signal.

After receiving the trigger frame or sending the announcement frame to the RSTA, the ISTA directionally sends the sensing measurement signal in a sensing direction. The sensing measurement signal is a signal used to sense a passive device in a surrounding environment. Specifically, an NDP frame may be sent. Specifically, as shown in FIG. 10, in a TB mode-based sensing measurement process, after receiving the trigger frame, the ISTA replies with an NDP frame. As shown in FIG. 11, in a non-TB mode-based sensing measurement process, after sending the announcement frame, the ISTA sends an NDP frame.

FIG. 12 is a schematic diagram in which the initiator station directionally sends the sensing measurement signal. In this embodiment, each of the ISTA and the RSTA is equipped with an antenna array that includes a plurality of Wi-Fi antennas, and location coordinates of the ISTA and the RSTA are known, and are respectively (x1, y1) and (x2, y2) (only a two-dimensional scenario is used as an example herein, and this application is also applicable to a higher-dimensional scenario such as a three-dimensional scenario). A dashed line in FIG. 12 represents a direction of a horizontal line. The ISTA directionally sends the sensing measurement signal in a specific direction AoD towards a to-be-detected target, and the signal is received by the RSTA after being reflected by the to-be-detected target.

It should be noted that a manner of performing measurement by the RSTA varies with a manner of sending the sensing measurement signal by the ISTA. Therefore, the manner of sending the sensing measurement signal by the ISTA needs to be explicitly indicated. In this embodiment, the sensing measurement signal may further include a first indication value, and the first indication value is used to indicate that the sensing measurement signal is directionally or omnidirectionally sent.

Specifically, the sensing measurement signal may be an NDP frame, and a beamformed (beamformed) field of SIG-A in the NDP frame is used to carry the first indication value. For example, when a value of the beamformed field is "1", it indicates that the ISTA directionally sends the sensing measurement signal, and the RSTA may measure only an incident direction of the NDP frame. When the value of the beamformed field is "0", it indicates that the ISTA omnidirectionally sends the sensing measurement signal, and the RSTA needs to measure both an incident direction and a time of arrival.

S205. The responder station measures the sensing measurement signal, to obtain an incident direction in which the sensing measurement signal arrives at the responder station after being reflected by the to-be-detected target.

After receiving the sensing measurement signal, the RSTA obtains the incident direction in which the sensing measurement signal arrives at the responder station after being reflected by the to-be-detected target, that is, calculates an angle of arrival (AoA) of the reflected signal.

S206. The responder station sends a first location measurement report to the initiator station, where the first location measurement report includes at least information about the incident direction in which the sensing measurement signal arrives at the responder station after being reflected by the to-be-detected target.

Correspondingly, the initiator station receives the first location measurement report.

Still referring to FIG. 10 and FIG. 11, after obtaining the incident direction in which the sensing measurement signal arrives at the responder station after being reflected by the to-be-detected target, the RSTA sends the first location measurement report to the ISTA. The first location measurement report includes the information about the incident direction in which the sensing measurement signal arrives at the responder station after being reflected by the to-be-detected target. Specifically, the first location measurement report includes the AoA of the reflected signal.

In this embodiment, a format of the first location measurement report is as follows:

| Category | Public action | Dialog token | To D | To A | ToD error | ToA error |
|---|---|---|---|---|---|---|
| 1 | 1 | 1 | 6 | 6 | 1 | 1 |

Octets:

| CFO parameter | Secure LTF parameters (optional) | AoA feedback |
|---|---|---|
| 2 | 13 | 9 |

Octets:

In the first location measurement report, for the sensing measurement signal that is directionally sent, the RSTA feeds back the AoA.

S207. The initiator station determines location information of the to-be-detected target based on first positioning information.

After receiving the first location measurement report, the ISTA obtains the AoA of the reflected signal, and the ISTA obtains location information of the ISTA, location information of the RSTA, and the AoD at which the ISTA sends the sensing measurement signal. In this case, the following two equations may be obtained based on a geometrical relationship:

$$\frac{y - y1}{x - x1} = \tan(AoD)$$

$$\frac{y - y2}{x - x2} = -\tan(AoA),$$

where

(x, y) is a location of the to-be-detected target.

In this case, the location of the to-be-detected target may be calculated based on the two equations:

$$x = \frac{x1 * \tan(AoD) + x2 * \tan(AoA) + y2 - y1}{\tan(AoA) + \tan(AoD)}$$

$$y = \frac{(y1 + x2 - x1) * \tan(AoA) + y2 * \tan(AoD)}{\tan(AoA) + \tan(AoD)}.$$

It should be noted that in this embodiment, it is not required that there needs to be a LOS condition between the ISTA and the RSTA, provided that there is a LOS condition between the to-be-detected target and each of the ISTA and the RSTA.

According to the sensing measurement method provided in this embodiment of this application, the initiator station directionally sends the sensing measurement signal, the responder station measures the sensing measurement signal reflected by the to-be-detected target, to obtain the incident direction of the reflected signal, and reports the incident direction to the initiator station, and the initiator station may accurately obtain the location of the to-be-detected target based on the location information of the initiator station, the location information of the responder station, the direction of departure of the sensing measurement signal, and the incident direction of the reflected signal, to implement sensing of the location of the passive target.

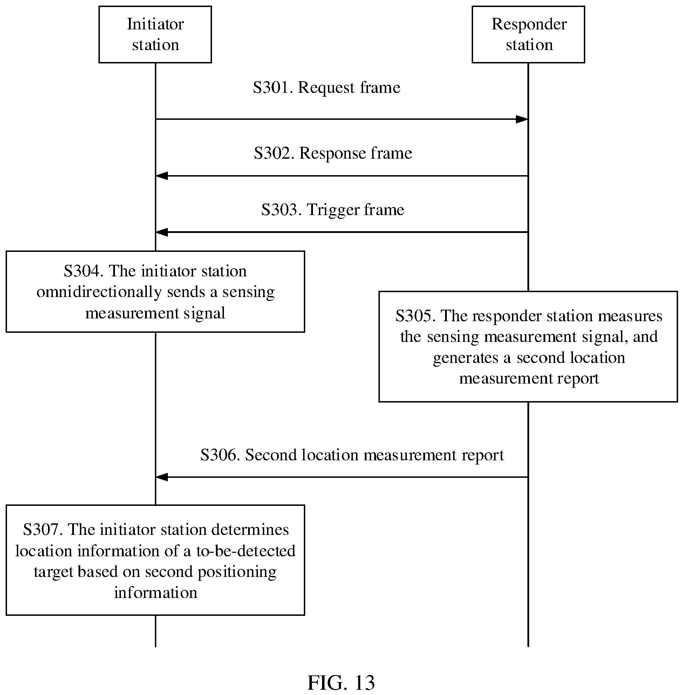

FIG. 13 is a schematic flowchart of another sensing measurement method according to an embodiment of this application. For example, the method may include the following steps.

S301. An initiator station sends a request frame to a responder station, where the request frame includes an indication indicating whether a current request is a sensing measurement request and an indication indicating whether the initiator station supports sensing measurement.

Correspondingly, the responder station receives the request frame.

For specific implementation of this step, refer to step S201 in the embodiment shown in FIG. 8.

S302. The responder station sends a response frame to the initiator station, where the response frame is used to respond to the request frame, and the response frame includes indication information indicating whether the current response is sensing measurement and indication information indicating whether the responder station supports sensing measurement.

Correspondingly, the initiator station receives the response frame.

For specific implementation of this step, refer to step S202 in the embodiment shown in FIG. 8.

S303. The responder station sends a trigger frame to the initiator station, where the trigger frame includes a type indication, the type indication is used to indicate that a type of the trigger frame is a sensing measurement type, and the trigger frame of the sensing measurement type is used to trigger the initiator station to perform sensing measurement.

Correspondingly, the initiator station receives the trigger frame.

For specific implementation of this step, refer to step S203 in the embodiment shown in FIG. 8.

S303 is based on a TB mode, or may be based on a non-TB mode in this embodiment. In an alternative implementation of S303, S303 may be replaced with the following content: The initiator station sends an announcement frame to the responder station, where the announcement frame is used to indicate the responder station to perform sensing measurement. Correspondingly, the responder station receives the announcement frame.

S304. The initiator station omnidirectionally sends a sensing measurement signal, where the sensing measurement signal arrives at the responder station in different directions of arrival through one or more paths.

Correspondingly, the responder station receives the sensing measurement signal sent by the initiator station and a signal reflected by a to-be-detected target.

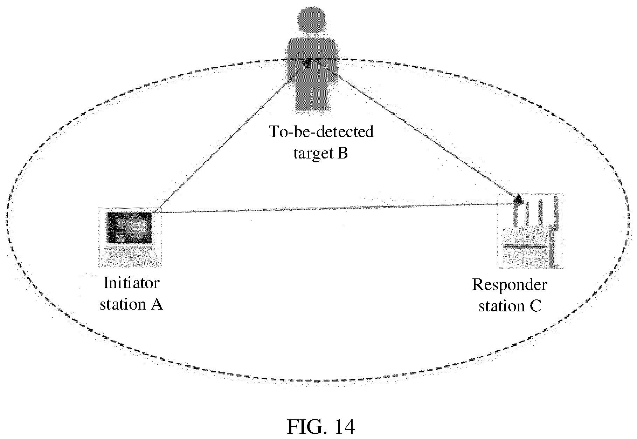

In this embodiment, the initiator station does not include an antenna array, and does not have a capability of directionally sending a signal. FIG. 14 is a schematic diagram in which the initiator station omnidirectionally sends the sensing measurement signal. The ISTA (station A) omnidirectionally sends the sensing measurement signal. Apart of the signal directly arrives at the RSTA (station C), and the other part of the signal arrives at the RSTA (station C) after being reflected by the to-be-detected target (target B).

S305. The responder station measures the sensing measurement signal, and generates a second location measurement report, where the second location measurement report includes one or more incident directions in which the sensing measurement signal arrives at the responder station and a corresponding time of arrival.

The RSTA may receive the sensing measurement signal sent by the ISTA or the sensing measurement signal reflected by the to-be-detected target. Therefore, the RSTA may measure the sensing measurement signal sent by the ISTA or the sensing measurement signal reflected by the to-be-detected target, to obtain the one or more incident directions in which the sensing measurement signal arrives at the responder station and the corresponding time of arrival, so as to generate the second location measurement report.

For omnidirectional detection, a specific format of the second location measurement report is as follows:

| Category | Public action | Dialog token | To D | To A | ToD error | ToA error |
|---|---|---|---|---|---|---|

Octets:  1   1   1   6   6   1   1

| CFO parameter | Secure LTF parameters (optional) | AoA and corresponding ToF |
|---|---|---|

Octets:  2   13   Variable

The second location measurement report includes one or more AoAs and corresponding ToF information.

Specifically, as shown in FIG. 14, A omnidirectionally sends a sensing measurement signal. A part of the signal directly arrives at C along an AC path, and a time of arrival is a ToF 0. The other part of the signal arrives at C after being reflected by the passive target B, and a time of arrival is a ToF 1.

S306. The responder station sends the second location measurement report to the initiator station.

Correspondingly, the initiator station receives the second location measurement report.

After generating the second location measurement report, the RSTA sends the second location measurement report to the ISTA.

S307. The initiator station determines location information of the to-be-detected target based on second positioning information.

The ISTA receives the second location measurement report sent by the ISTA, to obtain the one or more incident directions in which the sensing measurement signal arrives at the responder station and the corresponding time of arrival. In addition, the ISTA may further obtain location information of the ISTA and location information of the RSTA. The second positioning information includes the second location measurement report, the location information of the ISTA, and the location information of the RSTA.

The ISTA may determine the location information of the to-be-detected target based on the second positioning information.

Specifically, a transmission distance of a signal corresponding to an $i^{th}$ AoA may be first calculated based on the following formula:

$$D_i = (ToF_i - ToF_0)*c + \sqrt{(x_1-x_2)^2 + (y_1-y_2)^2} \; ,$$

where

$ToF_i$ is a time in which the signal corresponding to the $i^{th}$ AoA arrives at the responder station, $ToF_0$ is a time in which the sensing measurement signal arrives at the responder station through a line of sight between the initiator station and the responder station, c is a speed of light, a location of the initiator station is (x1, y1), and a location of the responder station is (x2, y2).

Then, it is determined that a location of the to-be-detected target is an intersection point of an incident direction ray of the $i^{th}$ AoA and an ellipse. For the ellipse, focal points are the location of the initiator station and the location of the responder station, and a long axis is equal to $D_i$.

It should be noted that for omnidirectional detection, AoAs of a plurality of reflected signals may be obtained, to simultaneously detect a plurality of passive targets.

Still referring to FIG. 14, a signal propagation speed is the speed c of light. In this case, a sum of a length of a line segment BA and a length of BC is as follows:

$$BA+BC=(ToF1-ToF0)*c+AC.$$

Based on the distance, it may be known that the point B is on an elliptic curve whose focal points are the points A and C and long axis is equal to BA+BC. In addition, an incident direction AoA of BC is obtained, and in this case, a straight line may be drawn in a direction of the AoA from the point C, and an intersection point of the straight line and the ellipse is the location of the passive target, namely, the point B.

According to the sensing measurement method provided in this embodiment of this application, the initiator station omnidirectionally sends the sensing measurement signal, the responder station measures the sensing measurement signal sent by the initiator station and the sensing measurement signal reflected by the to-be-detected target, to obtain the one or more incident directions in which the sensing measurement signal arrives at the responder station and the corresponding time of arrival, and reports the incident direction and the corresponding time of arrival to the initiator station, and the initiator station may accurately obtain the location of the to-be-detected target based on the location information of the initiator station, the location information of the responder station, a direction of departure of the sensing measurement signal, the one or more incident directions in which the sensing measurement signal arrives at the responder station, and the corresponding time of arrival, to implement sensing of the location of the passive target.

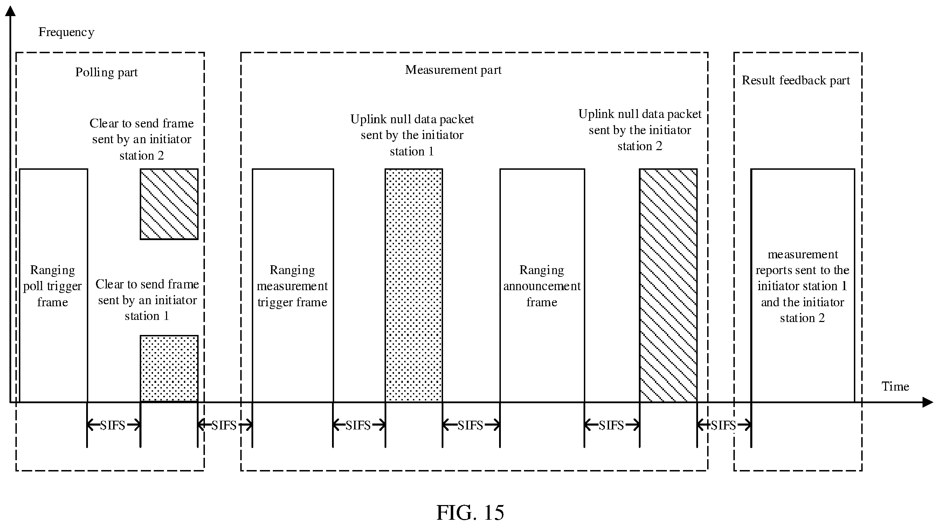

In another embodiment, FIG. 15 is a schematic diagram in which the RSTA simultaneously triggers a plurality of ISTAs to perform a sensing measurement procedure. The RSTA may respond to requests of the plurality of ISTAs in the negotiation phase, and the RSTA may trigger the plurality of ISTAs to participate in the sensing measurement procedure. As shown in FIG. 15, an example in which an RSTA based on a TB mode simultaneously triggers a plurality of ISTAs to perform a sensing measurement procedure is used. The RSTA sequentially triggers an ISTA 1 and an ISTA 2 to send a directional NDP frame. The RSTA receives a signal reflected by the to-be-detected target, and measures an AoA of the reflected signal, and then the RSTA sends measurement results of the ISTA 1 and the ISTA 2 together.

In the solution in this embodiment, the RSTA triggers the plurality of ISTAs to perform the sensing measurement procedure, and sends the measurement results together, thereby improving air interface efficiency.

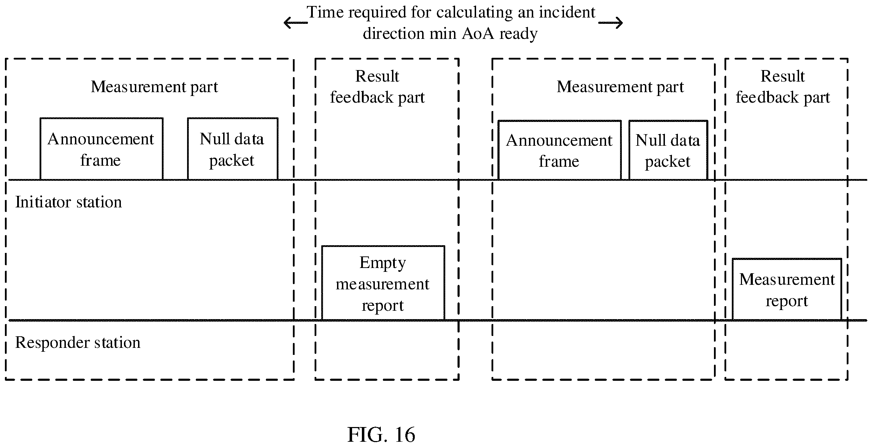

In another embodiment, FIG. 16 is a schematic diagram of a feedback delay procedure. In consideration of the fact that some RSTAs may not be able to complete calculation of a measurement result such as an AoA within an SIFS, the RSTA is allowed to delay feedback of a measurement report in sensing measurement and result feedback phases. During first measurement, the RSTA cannot immediately complete calculation of the measurement result. Therefore, the RSTA sends only an empty LMR to the ISTA, and the RSTA sends a previous measurement result to the ISTA at current measurement after a minimum time required for calculating the AoA (min AoA ready) passes.

To support the feedback delay, an indication is provided in the response frame in the foregoing embodiment. That is, the response frame further includes an indication indicating whether to delay feedback of the first location measurement report or the second location measurement report or an indication of a measurement time required when feedback is to be delayed. Specifically, four reserved bits in the ranging subelements field in the ranging parameters element field may be used to indicate the time required for calculating the AoA, and are recorded as a min AoA ready field. When a value of the reserved bit is 0, it indicates that the RSTA has a capability of completing calculation of the AoA within the SIFS, and no feedback delay is required. When the value of the reserved bit is another non-zero value, it indicates a length that is of the time required by the RSTA to complete calculation of the AoA and that is in a unit of 100 milliseconds or in another unit.

A specific format of the ranging subelements field based on the non-TB mode is as follows:

**(a) Non-TB specific parameters subelement format**

| Subelement ID (0) | Length | Min time between measurements | Min ToA Ready | Reserved | Max ToA available Exp |
|---|---|---|---|---|---|
| Bits: 8 | 8 | 8 | 1 | 4 | 4 |

**(b) TB specific parameters subelement format**

| | | | B0  B7 | B8  B15 | | | | |
|---|---|---|---|---|---|---|---|---|
| Subelement ID (1) | Length | Availability window | RID/AID | Response | Trigger frame padding duration | Passive location ranging | Max ToA-available Exp | BSS color |
| Bits: 8 | 8 | Variable | 16 | 1 | 2 | 1 | 4 | 8 |

In addition, when the NDP detection signal is directionally sent, to enable the RSTA to determine whether currently there is a new sensing detection and a reply with an empty LMR may be made or whether previous measurement is followed and the previous measurement result needs to be reported, an indication may be provided in the trigger frame. That is, the trigger frame is further used to indicate to perform new sensing measurement or report the previous measurement report. Specifically, the bit B26/B31 of the STA info field in the NDPA frame is used as the indication.

When the bit is 0, it indicates that the current detection is a new sensing direction, and the RSTA currently needs to reply with an empty LMR. If the bit is 1, it indicates that the sensing measurement is to obtain the previous measurement result, and the RSTA feeds back a previous LMR.

The methods in the embodiments of this application are described in detail above. Apparatuses in the embodiments of this application are provided below.

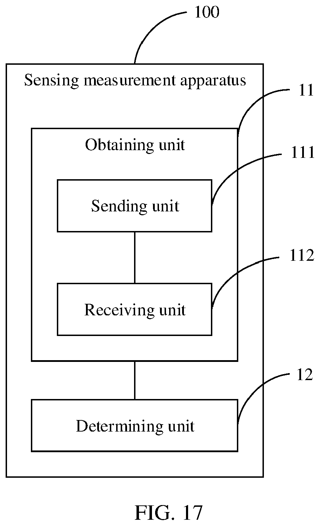

Based on a concept the same as that of the sensing measurement method in the foregoing embodiments, as shown in FIG. 17, an embodiment of this application further provides a sensing measurement apparatus 100. The sensing measurement apparatus may be applied to the sensing measurement method in FIG. 7, FIG. 8, or FIG. 13. The sensing measurement apparatus 100 includes an obtaining unit 11 and a determining unit 12.

For example, the obtaining unit 11 is configured to obtain first positioning information. The first positioning information includes one or more pieces of the following information: a location of an initiator station, a location of a responder station, a direction of departure in which the initiator station sends a sensing measurement signal, and an incident direction in which the sensing measurement signal arrives at the responder station after being reflected by a to-be-detected target.

Alternatively, the obtaining unit 11 is configured to obtain second positioning information. The second positioning information includes one or more pieces of the following information: a location of an initiator station, a location of a responder station, one or more incident directions in which a sensing measurement signal arrives at the responder station, and a corresponding time of arrival.

The determining unit 12 is configured to determine location information of the to-be-detected target based on the first positioning information or the second positioning information.

In an implementation, the obtaining unit 11 includes:

a sending unit 111, configured to directionally send the sensing measurement signal; and
a receiving unit 112, configured to receive a first location measurement report from the responder station, where the first location measurement report includes at least information about the incident direction in which the sensing measurement signal arrives at the responder station after being reflected by the to-be-detected target.

In another implementation, a sending unit 111 is configured to omnidirectionally send the sensing measurement signal, where the sensing measurement signal arrives at the responder station in different directions of arrival through one or more paths; and

a receiving unit 112 is configured to receive a second location measurement report from the responder station, where the second location measurement report includes at least information about the one or more incident directions in which the sensing measurement signal arrives at the responder station and the corresponding time of arrival.

In another implementation, the sending unit 111 is further configured to send a request frame to responder station, where the request frame includes indication information indicating whether a current request is a sensing measurement request and/or indication information indicating whether the initiator station supports sensing measurement; and the receiving unit 112 is further configured to receive a response frame from the responder station, where the response frame is used to respond to the request frame, and the response frame includes indication information indicating whether a current response is sensing measurement and/or indication information indicating whether the responder station supports sensing measurement.

In another implementation, the receiving unit 112 is further configured to receive a trigger frame from the responder station. The trigger frame includes a type indication, the type indication is used to indicate that a type of the trigger frame is a sensing measurement type, and the trigger frame of the sensing measurement type is used to trigger the initiator station to perform sensing measurement.

In another implementation, the sending unit 111 is further configured to send an announcement frame to the responder station. The announcement frame is used to indicate the responder station to perform sensing measurement.

In another implementation, the sensing measurement signal includes a first indication value, and the first indication value is used to indicate that the sensing measurement signal is directionally or omnidirectionally sent.

In another implementation, the response frame further includes an indication indicating whether to delay feedback of the first location measurement report or the second location measurement report or an indication of a measurement time required when feedback is to be delayed.

In another implementation, the trigger frame is further used to indicate to perform new sensing measurement or report a previous measurement report.

For more detailed description of the units, refer to related description of the sensing measurement apparatus in the method embodiment in FIG. 7, FIG. 8, or FIG. 13. Details are not described herein. It should be noted that the receiving unit and the sending unit that are independent of each other and that respectively have a receiving function and a sending function may be an integrated device that has a transceiver function. The integrated device is logically referred to as a "transceiver unit".

According to the sensing measurement apparatus provided in this embodiment of this application, a location of the to-be-detected target can be accurately obtained, to implement sensing of the location of the passive target.

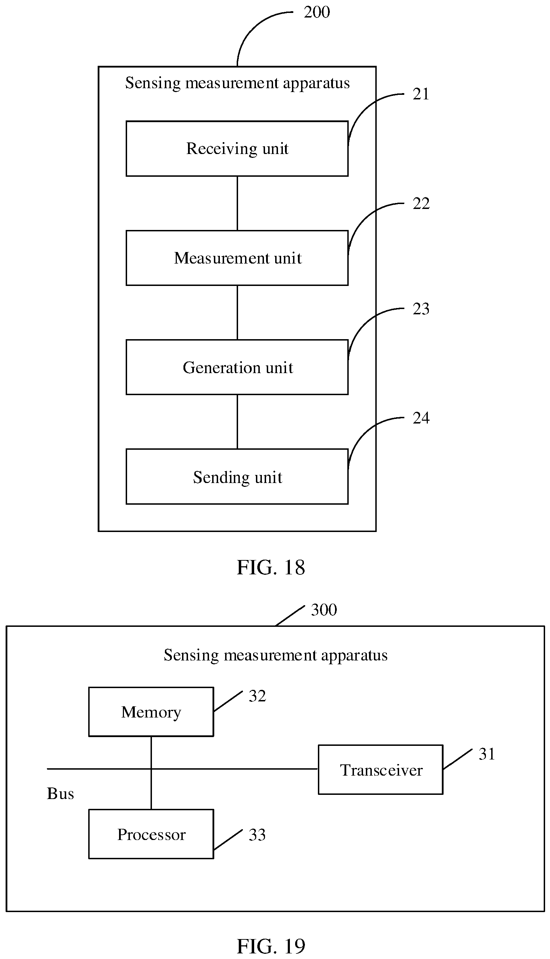

Based on a concept the same as that of the sensing measurement method in the foregoing embodiments, as shown in FIG. 18, an embodiment of this application further provides a sensing measurement apparatus 200. The sensing measurement apparatus may be applied to the sensing measurement method in FIG. 7, FIG. 8, or FIG. 13. The sensing measurement apparatus 200 includes a receiving unit 21, a measurement unit 22, a generation unit 23, and a sending unit 24. For example, the receiving unit 21 is configured to receive a sensing measurement signal directionally or omnidirectionally sent by an initiator station.

The measurement unit 22 is configured to measure the sensing measurement signal.

The generation unit 23 is configured to generate a first location measurement report based on the sensing measurement signal directionally sent by the initiator station. The first location measurement report includes at least information about an incident direction in which the sensing measurement signal arrives at a responder station after being reflected by a to-be-detected target.

Alternatively, the generation unit 23 is configured to generate a second location measurement report based on the sensing measurement signal omnidirectionally sent by the initiator station. The second location measurement report includes at least information about one or more incident directions in which the sensing measurement signal arrives at a responder station and a corresponding time of arrival.

The sending unit 24 is configured to send the first location measurement report or the second location measurement report to the initiator station.

In an implementation, the receiving unit 21 is further configured to receive a request frame from the initiator station, where the request frame includes indication information indicating whether a current request is a sensing measurement request and/or indication information indicating whether the initiator station supports sensing measurement; and the sending unit 24 is further configured to send a response frame to the initiator station, where the response frame is used to respond to the request frame, and the response frame includes indication information indicating whether a current response is sensing measurement and/or indication information indicating whether the responder station supports sensing measurement.

In another implementation, the sending unit 24 is further configured to send a trigger frame to the initiator station. The trigger frame includes a type indication, the type indication is used to indicate that a type of the trigger frame is a sensing measurement type, and the trigger frame of the sensing measurement type is used to trigger the initiator station to perform sensing measurement.

In still implementation, the receiving unit 21 is further configured to receive an announcement frame from the initiator station. The announcement frame is used to indicate the responder station to perform sensing measurement.

In another implementation, the sensing measurement signal includes a first indication value, and the first indication value is used to indicate that the sensing measurement signal is directionally or omnidirectionally sent.

In another implementation, the response frame further includes an indication indicating whether to delay feedback of the first location measurement report or the second location measurement report or an indication of a measurement time required when feedback is to be delayed.

In another implementation, the trigger frame is further used to indicate to perform new sensing measurement or report a previous measurement report.

For more detailed description of the units, refer to related description of the sensing measurement apparatus in the method embodiment in FIG. 7, FIG. 8, or FIG. 13. Details are not described herein. It should be noted that the receiving unit and the sending unit that are independent of each other and that respectively have a receiving function and a sending function may be an integrated device that has a transceiver function. The integrated device is logically referred to as a "transceiver unit".

According to the sensing measurement apparatus provided in this embodiment of this application, a location of the to-be-detected target can be accurately obtained, to implement sensing of the location of the passive target.

FIG. 19 is a schematic structural diagram of another sensing measurement apparatus according to an embodiment of this application. As shown in FIG. 19, the sensing measurement apparatus 300 may include: a transceiver 31, a memory 32, and a processor 33 (there may be one or more processors 33 in the apparatus, and one processor is used as an example in FIG. 19). In some embodiments of this application, the transceiver 31, the memory 32, and the processor 33 may be connected by using a bus or in another manner. In FIG. 19, an example in which the transceiver 31, the memory 32, and the processor 33 are connected by using a bus is used.

In some embodiments, the processor 33 is configured to execute a function of the initiator station in the embodiment shown in FIG. 7, FIG. 8, or FIG. 13.

In still some embodiments, the processor 33 is configured to execute a function of the responder station in the embodiment shown in FIG. 7, FIG. 8, or FIG. 13.

It may be understood that functions of the function modules of the sensing measurement apparatus 300 in this embodiment may be specifically implemented based on the method in the embodiment shown in FIG. 7, FIG. 8, or FIG. 13. For a specific implementation process of the sensing measurement apparatus 300, refer to the related descriptions in the method embodiments. Details are not described herein again.

Optionally, the memory may be a physically independent unit, or may be integrated with the processor.

Optionally, when some or all of the communication methods in the foregoing embodiments are implemented by using software, the communication apparatus may alternatively include only a processor. The memory configured to store a program is located outside the communication apparatus, and the processor is connected to the memory by using a circuit/wire, and is configured to read and execute the program stored in the memory.

The processor may be a central processing unit (central processing unit, CPU), a network processor (network processor, NP), or a combination of a CPU and an NP.

Optionally, the processor may include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory may include a volatile memory (volatile memory), for example, a random access memory (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, division into the units is merely logical function division and may be other division during actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random-access memory (random-access memory, RAM), a magnetic medium such as a floppy disk, a hard disk, a magnetic tape, a magnetic disk, an optical medium such as a digital versatile disc (digital versatile disc, DVD), or a semiconductor medium such as a solid-state drive (solid-state disk, SSD).

**Claims**

1. A sensing measurement method, wherein the method comprises:

    obtaining, by an initiator station, first positioning information, wherein the first positioning information comprises one or more pieces of the following information: a location of the initiator station, a location of a responder station, a direction of departure in which the initiator station sends a sensing measurement signal, and an incident direction in which the sensing measurement signal arrives at the responder station after being reflected by a to-be-detected target; or

obtaining, by an initiator station, second positioning information, wherein the second positioning information comprises one or more pieces of the following information: a location of the initiator station, a location of a responder station, one or more incident directions in which a sensing measurement signal arrives at the responder station, and a corresponding time of arrival; and

determining, by the initiator station, location information of the to-be-detected target based on the first positioning information or the second positioning information.

2. The method according to claim 1, wherein the obtaining, by an initiator station, first positioning information comprises:

directionally sending, by the initiator station, the sensing measurement signal; and

receiving, by the initiator station, a first location measurement report from the responder station, wherein the first location measurement report comprises at least information about the incident direction in which the sensing measurement signal arrives at the responder station after being reflected by the to-be-detected target.

3. The method according to claim 1, wherein the obtaining, by an initiator station, second positioning information comprises:

omnidirectionally sending, by the initiator station, the sensing measurement signal, wherein the sensing measurement signal arrives at the responder station in different directions of arrival through one or more paths; and

receiving, by the initiator station, a second location measurement report from the responder station, wherein the second location measurement report comprises at least information about the one or more incident directions in which the sensing measurement signal arrives at the responder station and the corresponding time of arrival.

4. The method according to any one of claims 1 to 3, wherein the method further comprises:

sending, by the initiator station, a request frame to the responder station, wherein the request frame comprises indication information indicating whether a current request is a sensing measurement request and/or indication information indicating whether the initiator station supports sensing measurement; and

receiving, by the initiator station, a response frame from the responder station, wherein the response frame is used to respond to the request frame, and the response frame comprises indication information indicating whether a current response is sensing measurement and/or indication information indicating whether the responder station supports sensing measurement.

5. The method according to any one of claims 1 to 3, wherein the method further comprises:
receiving, by the initiator station, a trigger frame from the responder station, wherein the trigger frame comprises a type indication, the type indication is used to indicate that a type of the trigger frame is a sensing measurement type, and the trigger frame of the sensing measurement type is used to trigger the initiator station to perform sensing measurement.

6. The method according to any one of claims 1 to 3, wherein the method further comprises:
sending, by the initiator station, an announcement frame to the responder station, wherein the announcement frame is used to indicate the responder station to perform sensing measurement.

7. The method according to any one of claims 1 to 6, wherein the sensing measurement signal comprises a first indication value, and the first indication value is used to indicate that the sensing measurement signal is directionally or omnidirectionally sent.

8. The method according to claim 4, wherein the response frame further comprises an indication indicating whether to delay feedback of the first location measurement report or the second location measurement report or an indication of a measurement time required when feedback is to be delayed.

9. The method according to claim 5, wherein the trigger frame is further used to indicate to perform new sensing measurement or report a previous measurement report.

10. A sensing measurement method, wherein the method comprises:

receiving, by a responder station, a sensing measurement signal directionally or omnidirectionally sent by an initiator station;

measuring, by the responder station, the sensing measurement signal;

generating, by the responder station, a first location measurement report based on the sensing measurement signal directionally sent by the initiator station, wherein the first location measurement report comprises at least information about an incident direction in which the sensing measurement signal arrives at the responder station after being reflected by a to-be-detected target; or

generating, by the responder station, a second location measurement report based on the sensing measurement signal omnidirectionally sent by the initiator station, wherein the second location measurement report comprises at least information about one or more incident directions in which the sensing measurement signal arrives at the responder station and a corresponding time of arrival; and

sending, by the responder station, the first location measurement report or the second location measurement report to the initiator station.

11. The method according to claim 10, wherein the method further comprises:

receiving, by the responder station, a request frame from the initiator station, wherein the request frame comprises indication information indicating whether a current request is a sensing measurement request and/or indication information indicating whether the initiator station supports sensing measurement; and

sending, by the responder station, a response frame to the initiator station, wherein the response frame is used to respond to the request frame, and the response frame comprises indication information indicating whether a current response is sensing measurement and/or indication information indicating whether the responder station supports sensing measurement.

12. The method according to claim 10 or 11, wherein the method further comprises:
sending, by the responder station, a trigger frame to the initiator station, wherein the trigger frame comprises a type indication, the type indication is used to indicate that a type of the trigger frame is a sensing measurement type, and the trigger frame of the sensing measurement type is used to trigger the initiator station to perform sensing measurement.

13. The method according to claim 10 or 11, wherein the method further comprises:
receiving, by the responder station, an announcement frame from the initiator station, wherein the announcement frame is used to indicate the responder station to perform sensing measurement.

14. The method according to any one of claims 10 to 13, wherein the sensing measurement signal comprises a first indication value, and the first indication value is used to indicate that the sensing measurement signal is directionally or omnidirectionally sent.

15. The method according to claim 11, wherein the response frame further comprises an indication indicating whether to delay feedback of the first location measurement report or the second location measurement report or an indication of a measurement time required when feedback is to be delayed.

16. The method according to claim 12, wherein the trigger frame is further used to indicate to perform new sensing measurement or report a previous measurement report.

17. A sensing measurement apparatus, comprising:

an obtaining unit, configured to obtain first positioning information, wherein the first positioning information comprises one or more pieces of the following information: a location of an initiator station, a location of a responder station, a direction of departure in which the initiator station sends a sensing measurement signal, and an incident direction in which the sensing measurement signal arrives at the responder station after being reflected by a to-be-detected target; or

an obtaining unit, configured to obtain second positioning information, wherein the second positioning information comprises one or more pieces of the following information: a location of an initiator station, a location of a responder station, one or more incident directions in which a sensing measurement signal arrives at the responder station, and a corresponding time of arrival; and

a determining unit, configured to determine location information of the to-be-detected target based on the first positioning information or the second positioning information.

**18.** The sensing measurement apparatus according to claim 17, wherein the obtaining unit comprises:

a sending unit, configured to directionally send the sensing measurement signal; and
a receiving unit, configured to receive a first location measurement report from the responder station, wherein the first location measurement report comprises at least information about the incident direction in which the sensing measurement signal arrives at the responder station after being reflected by the to-be-detected target.

**19.** The sensing measurement apparatus according to claim 17, wherein

a sending unit is configured to omnidirectionally send the sensing measurement signal, wherein the sensing measurement signal arrives at the responder station in different directions of arrival through one or more paths; and
a receiving unit is configured to receive a second location measurement report from the responder station, wherein the second location measurement report comprises at least information about the one or more incident directions in which the sensing measurement signal arrives at the responder station and the corresponding time of arrival.

**20.** The sensing measurement apparatus according to any one of claims 17 to 19, wherein

the sending unit is further configured to send a request frame to the responder station, wherein the request frame comprises indication information indicating whether a current request is a sensing measurement request and/or indication information indicating whether the initiator station supports sensing measurement; and
the receiving unit is further configured to receive a response frame from the responder station, wherein the response frame is used to respond to the request frame, and the response frame comprises indication information indicating whether a current response is sensing measurement and/or indication information indicating whether the responder station supports sensing measurement.

**21.** The sensing measurement apparatus according to any one of claims 17 to 19, wherein
the receiving unit is further configured to receive a trigger frame from the responder station, wherein the trigger frame comprises a type indication, the type indication is used to indicate that a type of the trigger frame is a sensing measurement type, and the trigger frame of the sensing measurement type is used to trigger the initiator station to perform sensing measurement.

**22.** The sensing measurement apparatus according to any one of claims 17 to 19, wherein
the sending unit is further configured to send an announcement frame to the responder station, wherein the announcement frame is used to indicate the responder station to perform sensing measurement.

**23.** A sensing measurement apparatus, comprising:

a receiving unit, configured to receive a sensing measurement signal directionally or omnidirectionally sent by an initiator station;
a measurement unit, configured to measure the sensing measurement signal;
a generation unit, configured to generate a first location measurement report based on the sensing measurement signal directionally sent by the initiator station, wherein the first location measurement report comprises at least information about an incident direction in which the sensing measurement signal arrives at a responder station after being reflected by a to-be-detected target; or
a generation unit, configured to generate a second location measurement report based on the sensing measurement signal omnidirectionally sent by the initiator station, wherein the second location measurement report comprises at least information about one or more incident directions in which the sensing measurement signal arrives at a responder station and a corresponding time of arrival; and
a sending unit, configured to send the first location measurement report or the second location measurement report to the initiator station.

**24.** The sensing measurement apparatus according to claim 23, wherein

the receiving unit is further configured to receive a request frame from the initiator station, wherein the request frame comprises indication information indicating whether a current request is a sensing measurement request and/or indication information indicating whether the initiator station supports sensing measurement; and

the sending unit is further configured to send a response frame to the initiator station, wherein the response frame is used to respond to the request frame, and the response frame comprises indication information indicating whether a current response is sensing measurement and/or indication information indicating whether the responder station supports sensing measurement.

25. The sensing measurement apparatus according to claim 23 or 24, wherein
the sending unit is further configured to send a trigger frame to the initiator station, wherein the trigger frame comprises a type indication, the type indication is used to indicate that a type of the trigger frame is a sensing measurement type, and the trigger frame of the sensing measurement type is used to trigger the initiator station to perform sensing measurement.

26. The sensing measurement apparatus according to claim 23 or 24, wherein
the receiving unit is further configured to receive an announcement frame from the initiator station, wherein the announcement frame is used to indicate the responder station to perform sensing measurement.

27. A sensing measurement apparatus, comprising a transceiver, a memory, and a processor, wherein the memory stores a group of program code, and the processor is configured to invoke the program code stored in the memory, to perform the sensing measurement method according to any one of claims 1 to 9 or the sensing measurement method according to any one of claims 10 to 16.

28. A computer-readable storage medium, wherein the computer-readable storage medium stores a computer program, and when the program is executed by a processor, the method according to any one of claims 1 to 16 is implemented.

29. A computer program product, wherein when the computer program product is executed on a computing device, the method according to any one of claims 1 to 16 is performed.

FIG. 1

Frequency

Negotiation procedure

Negotiate and allocate a ranging identifier

Measurement and result feedback procedures

Polling part

Measurement sounding part

Measurement report part

Available time period N

Fixed interval

Measurement and result feedback procedures

Polling part

Measurement sounding part

Measurement report part

Available time period N+1

Fixed interval

FIG. 2

FIG. 3

EP 3 986 018 A1

FIG. 4

EP 3 986 018 A1

Responder
station RSTA

Initiator
station ISTA

Ranging trigger frame

t1

Uplink null data packet UL NDP

t2

Downlink ranging announcement frame

t3

Downlink null data packet DL NDP

t4

FIG. 5

Initiator
station

Responder
station

t1

*Null data packet announcement NDPA*

*Uplink null data packet UL NDP*

t2

t3

*Downlink null data packet DL NDP*

t4

FIG. 6

An initiator station obtains first positioning information or
second positioning information

S101

The initiator station determines location information of a to-be-
detected target based on the first positioning information or the
second positioning information

S102

FIG. 7

```
┌─────────┐                                          ┌─────────┐
│Initiator│                                          │Responder│
│ station │                                          │ station │
└────┬────┘                                          └────┬────┘
     │              S201. Request frame                   │
     │───────────────────────────────────────────────────▶│
     │                                                    │
     │              S202. Response frame                  │
     │◀───────────────────────────────────────────────────│
     │                                                    │
     │              S203. Trigger frame                   │
     │◀───────────────────────────────────────────────────│
```

S204. The initiator station directionally sends a sensing measurement signal

S205. The responder station measures the sensing measurement signal, to obtain an incident direction in which the sensing measurement signal arrives at the responder station after being reflected by a to-be-detected target

S206. First location measurement report

S207. The initiator station determines location information of the to-be-detected target based on first positioning information

FIG. 8

Responder station                                                      Initiator station

≤ 10 ms                          Request frame

                                 Acknowledgement message

                                 Response frame

                                 Acknowledgement message

FIG. 9

FIG. 10

FIG. 11

FIG. 12

```
┌──────────┐                                      ┌──────────┐
│Initiator │                                      │Responder │
│ station  │                                      │ station  │
└────┬─────┘                                      └────┬─────┘
     │            S301. Request frame                  │
     │────────────────────────────────────────────────▶
     │            S302. Response frame                 │
     ◀────────────────────────────────────────────────│
     │            S303. Trigger frame                  │
     ◀────────────────────────────────────────────────│
┌────┴─────────────────────────┐                       │
│  S304. The initiator station │                       │
│  omnidirectionally sends a   │                       │
│  sensing measurement signal  │                       │
└────┬─────────────────────────┘       ┌───────────────┴─────────────────┐
     │                                 │ S305. The responder station     │
     │                                 │ measures the sensing            │
     │                                 │ measurement signal, and         │
     │                                 │ generates a second location     │
     │                                 │ measurement report              │
     │                                 └───────────────┬─────────────────┘
     │     S306. Second location measurement report    │
     ◀────────────────────────────────────────────────│
┌────┴─────────────────────────┐                       │
│ S307. The initiator station  │                       │
│ determines location          │                       │
│ information of a to-be-      │                       │
│ detected target based on     │                       │
│ second positioning           │                       │
│ information                  │                       │
└────┬─────────────────────────┘                       │
     │                                                 │
```

FIG. 13

To-be-detected
target B

Initiator
station A

Responder
station C

FIG. 14

Frequency

Polling part

Measurement part

Result feedback part

Clear to send frame
sent by an initiator
station 2

Uplink null data packet
sent by the initiator
station 1

Uplink null data packet
sent by the initiator
station 2

Ranging
poll trigger
frame

Clear to send frame
sent by an initiator
station 1

Ranging
measurement
trigger frame

Ranging
announcement
frame

measurement
reports sent to the
initiator station 1
and the initiator
station 2

Time

←SIFS→  ←SIFS→   ←SIFS→   ←SIFS→   ←SIFS→  ←SIFS→

FIG. 15

FIG. 16

FIG. 17

200

Sensing measurement apparatus

Receiving unit — 21

Measurement unit — 22

Generation unit — 23

Sending unit — 24

FIG. 18

300

Sensing measurement apparatus

Memory — 32

Transceiver — 31

Bus

Processor — 33

FIG. 19

## INTERNATIONAL SEARCH REPORT

| International application No. |
| --- |
| **PCT/CN2020/100019** |

**A. CLASSIFICATION OF SUBJECT MATTER**

H04W 24/10(2009.01)i; G01S 5/02(2010.01)i

According to International Patent Classification (IPC) or to both national classification and IPC

**B. FIELDS SEARCHED**

Minimum documentation searched (classification system followed by classification symbols)

H04W; H04B; H04Q; G01S

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 测量, 感知, 探测, 目标, 对象, 位置, 定位, 发起, 站点, 发送, 响应, 接收, 发射, 方向, 反射, 入射, 时间, 无源, 双基, 多基, 雷达 wifi, wi-fi, time, measurement, FTM, initiator, station, ISTA, radar, responder, round-trip, RTT, RSTA, AoA, AoD, TDOA, localization, NLOS, reflect

**C. DOCUMENTS CONSIDERED TO BE RELEVANT**

| Category* | Citation of document, with indication, where appropriate, of the relevant passages | Relevant to claim No. |
| --- | --- | --- |
| Y | CN 103308934 A (SHANGHAI RADIO EQUIPMENT INSTITUTE) 18 September 2013 (2013-09-18)<br>abstract, description paragraphs [0004]-[0015], figure 3 | 1-29 |
| Y | CN 103427905 A (NANJING UNIVERSITY OF AERONAUTICS AND ASTRONAUTICS) 04 December 2013 (2013-12-04)<br>description, paragraphs [0002]-[0003] | 1-29 |
| A | CN 110632555 A (PLA STRATEGIC SUPPORT FORCE INFORMATION ENGINEERING UNIVERSITY) 31 December 2019 (2019-12-31)<br>entire document | 1-29 |
| A | US 2012122470 A1 (THALES) 17 May 2012 (2012-05-17)<br>entire document | 1-29 |
| A | SHIKUR, Behailu Y. et al. "TDOA/AOD/AOA LOCALIZATION IN NLOS ENVIRONMENTS"<br>*2014 IEEE International Conference on Acoustic, Speech and Signal Processing (ICASSP),*<br>31 December 2014 (2014-12-31),<br>pages 6518-6521 | 1-29 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 September 2020** | **28 September 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/100019**

| Patent document cited in search report | | | Publication date (day/month/year) | Patent family member(s) | | | Publication date (day/month/year) |
|---|---|---|---|---|---|---|---|
| CN | 103308934 | A | 18 September 2013 | None | | | |
| CN | 103427905 | A | 04 December 2013 | None | | | |
| CN | 110632555 | A | 31 December 2019 | None | | | |
| US | 2012122470 | A1 | 17 May 2012 | EP | 2368133 | A1 | 28 September 2011 |
| | | | | PL | 2368133 | T3 | 31 January 2013 |
| | | | | WO | 2010072593 | A1 | 01 July 2010 |
| | | | | CN | 102308228 | A | 04 January 2012 |
| | | | | FR | 2940462 | A1 | 25 June 2010 |

Form PCT/ISA/210 (patent family annex) (January 2015)

**EP 3 986 018 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910625709